(19) Europäisches Patentamt
European Patent Office
Office européen des brevets

(11) **EP 2 395 050 A1**

(12) **EUROPEAN PATENT APPLICATION**
published in accordance with Art. 153(4) EPC

(43) Date of publication:
**14.12.2011 Bulletin 2011/50**

(51) Int Cl.:
***C08L 23/00*** *(2006.01)*  ***C08J 9/00*** *(2006.01)*
***C08K 3/00*** *(2006.01)*  ***H01M 2/16*** *(2006.01)*

(21) Application number: **10738668.2**

(22) Date of filing: **04.02.2010**

(86) International application number:
**PCT/JP2010/052007**

(87) International publication number:
**WO 2010/090340 (12.08.2010 Gazette 2010/32)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.02.2009 JP 2009025837**

(71) Applicant: **Sumitomo Chemical Company, Limited
Tokyo 104-8260 (JP)**

(72) Inventors:
• **HASEGAWA, Hirohiko
  Niihama-shi
  Ehime 792-0025 (JP)**
• **YASHIKI, Daizaburo
  Niihama-shi
  Ehime 792-0025 (JP)**

(74) Representative: **Hart-Davis, Jason et al
Cabinet Beau de Loménie
158, rue de l'Université
75340 Paris Cedex 07 (FR)**

(54) **RESIN COMPOSITION, SHEET, AND POROUS FILM**

(57)    Disclosed is a resin composition containing a filler, a high molecular weight polyolefin, and a polyolefin wax having a weight average molecular weight of 700 to 6,000, wherein the resin composition satisfies the following formula (1), assuming that the weight of the ultrahigh molecular weight polyolefin contained in the resin composition is W1, the weight of the polyolefin wax having a weight average molecular weight of 700 to 6,000 is W2, and the intrinsic viscosity of the ultrahigh molecular weight polyolefin is [η]:

$$[\eta] \times 4.3 - 21 < \{W2/(W1+W2)\} \times 100 < [\eta] \times 4.3 - 8 \quad \text{Formula (1)}$$

EP 2 395 050 A1

**Description**

TECHNICAL FIELD

The present invention relates to a resin composition, a sheet obtained by shaping the resin composition, and a porous film obtained by stretching the sheet.

BACKGROUND ART

A porous film has been used for various applications, e.g. for hygienic material, medical material and battery separator. High puncture strength is required for the porous film, when it is used as a battery separator of a lithium ion secondary battery or the like.

As the method for producing a porous film excellent in the puncture strength, it is known to produce a porous film by kneading a composition containing a high molecular weight polyolefin having a weight average molecular weight of $5 \times 10^5$ or more, a thermoplastic resin having a weight average molecular weight of $2 \times 10^4$ or less, and a fine particle; shaping the kneaded product into a sheet form; and then stretching the sheet (see, JP2002-69221A (Patent Document 1)).

However, for producing a homogeneous porous film by using the composition above over a long period of time, the kneading conditions must be strictly controlled, and therefore a composition having a better processability is demanded.

SUMMARY OF THE INVENTION

An object of the present invention is to provide a resin composition achieving a well-balanced processability at the production of a porous film and puncture strength of the porous film, a sheet obtained using the resin composition, a porous film, a battery separator, and a battery.

The present invention includes [1] to [6].

[1] A resin composition containing a filler, a high molecular weight polyolefin, and a polyolefin wax having a weight average molecular weight of 700 to 6,000, wherein the resin composition satisfies the following formula (1), where the weight of the ultrahigh molecular weight polyolefin contained in the resin composition is W1, the weight of the polyolefin wax having a weight average molecular weight of 700 to 6,000 is W2, and the intrinsic viscosity of the ultrahigh molecular weight polyolefin is [η]:

$$[\eta] \times 4.3 - 21 < \{W2/(W1+W2)\} \times 100 < [\eta] \times 4.3 - 8 \qquad \text{Formula (1)}$$

[2] A sheet obtained by shaping the resin composition of [1] above.
[3] A porous film obtained by stretching the sheet of [2] above.
[4] A multilayer porous film which has the porous film of [3] above and a porous heat-resistant layer laminated to each other.
[5] A battery separator comprising the porous film described in [3] above or the multilayer porous film described in [4] above.
[6] A battery comprising the battery separator described in [5] above.

According to the present invention, it is possible to provide a resin composition achieving a well-balanced processability at the production of a porous film and puncture strength of the porous film, a sheet obtained using the resin composition, a porous film, a battery separator, and a battery.

MODE FOR CARRYING OUT THE INVENTION

The present invention is a resin composition containing a filler, a high molecular weight polyolefin, and a polyolefin wax having a weight average molecular weight of 700 to 6,000, wherein the resin composition satisfies the following formula (1), where the weight of the ultrahigh molecular weight polyolefin contained in the resin composition is W1, the weight of the polyolefin wax having a weight average molecular weight of 700 to 6,000 is W2, and the intrinsic viscosity of the ultrahigh molecular weight polyolefin is [η]:

$$[\eta] \times 4.3 - 21 < \{W2/(W1+W2)\} \times 100 < [\eta] \times 4.3 - 8 \qquad \text{Formula (1)}$$

The high molecular weight polyolefin used for in the present invention preferably has an intrinsic viscosity $[\eta]$ of 4 to 30 dl/g, in view of balance between the puncture strength of the obtained porous film and the processability at the film production, and more preferably from 5 to 15 dl/g. Examples of the high molecular polyolefin include a high molecular weight homopolymer or copolymer obtained by polymerizing ethylene, propylene, 1-butene, 4-methyl-1-pentene or 1-hexane. Among them, a high molecular weight polyethylene containing an ethylene-derived structural unit as a main component is preferred. The weight average molecular weight (Mw) of the high molecular weight polyolefin is preferably from 400,000 to 10,000,000.

The intrinsic viscosity of the high molecular weight polyolefin is an intrinsic viscosity determined by using tetralin as the solvent and measuring the solution at 135°C by means of a Ubbelohde viscometer in accordance with JIS K7130.

The polyolefin wax used for the present invention is a wax having a weight average molecular weight of 700 to 6,000. The weight average molecular weight of the polyolefin wax is a polystyrene-equivalent weight average molecular weight determined by GPC measurement. The GPC measurement is performed at 140°C by using O-dichlorobenzene as the solvent.

Examples of the polyolefin wax include a polyethylene resin such as ethylene homopolymer and ethylene-$\alpha$-olefin copolymer, a polypropylene-based resin such as propylene homopolymer and propylene-$\alpha$-olefin copolymer, a poly(4-methyl-1-pentene), a poly(1-butene), and an ethylene-vinyl acetate copolymer.

A polyolefin wax having a superior compatibility with the high molecular weight polyolefin is preferably selected. For example, in the case of using a high molecular weight polyethylene as the high molecular weight polyolefin, a polyethylene wax is preferably used as the polyolefin wax, and an ethylene-$\alpha$-olefin copolymer wax is more preferably used.

When the high molecular weight polyolefin and polyolefin wax used for the present invention are mixed together with a filler in amounts satisfying formula (1), processing into a sheet or a film is facilitated, and the obtained sheet or film has high puncture strength. It is considered that, by adding an appropriate amount of polyolefin wax according to the intrinsic viscosity of the high molecular weight polyolefin, good processability can be obtained because of appropriately preserved molecular mobility of the composition, and at the same time, adequate puncture strength can be achieved based on the intrinsic viscosity and ratio of the high molecular weight polyolefin used. That is, if the following formula is satisfied, the sheet or film formed may have high puncture strength, but the resin composition suffers from poor processability:

$$[\eta] \times 4.3 - 21 \geq \{W2/(W1+W2)\} \times 100$$

On the other hand, if the following formula is satisfied, excellent processability may be obtained, but the sheet or film formed suffers from poor puncture strength:

$$\{W2/(W1+W2)\} \times 100 \geq [\eta] \times 4.3 - 8$$

As the filler used for the present invention, inorganic or organic fine particles which are generally referred to as a filler, is used. Examples of the inorganic fine particle, which can be used, include calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, glass powder, and zinc oxide. Among these, calcium carbonate and barium sulfate are particularly preferred. As the organic fine particle, a known resin particle is used, and the resin is preferably a polymer obtained by polymerizing single monomer or two or more monomers such as styrene, acrylonitrile, methyl methacrylate, ethyl methacrylate, glycidyl methacrylate and methyl acrylate; or a polycondensed resin of melamine, urea or the like.

The filler may be removed before stretching the sheet or after the stretching. In this case, it is preferred that the filler is soluble in a neutral, acidic or alkaline aqueous solution or water, because the filler can be easily removed. Among the above-described fine particles, examples of the filler soluble in an aqueous solution or water include talc, clay, kaolin, diatomaceous earth, calcium carbonate, magnesium carbonate, barium carbonate, magnesium sulfate, calcium oxide, calcium oxide, magnesium hydroxide, calcium hydroxide, zinc oxide and silica. Among these, calcium carbonate is preferred.

The average particle diameter of the filler is preferably from 0.01 to 3 $\mu$m, more preferably from 0.02 to 1 $\mu$m,

and most preferably from 0.05 to 0.5 μm. When the average particle diameter is 3 μm or less, a film having a superior puncture strength can be obtained. When it is 0.01 μm or more, the filler tends to be highly dispersed in the high molecular weight polyolefin and polyolefin wax, and therefore uniformly opened pores tend to be obtained by stretching.

The filler used for the present invention is preferably a surface-treated filler in order to improve dispensivity in a high molecular weight polyolefin and wax, to facilitate interfacial separation from the resin, and to prevent external moisture absorption. Examples of the surface treating agent can include a higher fatty acid such as stearic acid and lauric acid, and a metal salt thereof.

The content of the filler in the resin composition of the present invention is, where the total volume of the high molecular weight polyolefin and the polyolefin wax is 100 parts by volume, preferably from 15 to 150 parts by volume, more preferably from 25 to 100 parts by volume. With a content of 15 parts by volume or more, sufficient pores are opened by stretching, and a preferable porous film can be obtained. With a content of 150 parts by volume or less, a porous film with superior puncture strength can be obtained due to a high resin ratio.

In the resin composition of the present invention, if desired, generally-employed additives (such as antistatic agent, plasticizer, lubricant, antioxidant and nucleating agent) may be added within the range not impairing the object of the present invention.

The production process for the polyolefin-based resin composition of the present invention is not particularly limited, but the composition can be obtained by kneading the raw materials, i.e. high molecular weight polyolefin, polyolefin wax, filler, and optional additives, with 2 kneading apparatus achieving a high shear force. Specific examples of the apparatus include a roll, a Banbury mixer, a single-screw extruder, and a twin-screw extruder.

The method for shaping the resin composition of the present invention to produce a sheet is not particularly limited, but examples thereof include inflation processing, calendering processing, T-die extrusion processing and scaif method. The sheet is preferably produced by the following method in order to obtain a sheet having higher thickness accuracy.

The preferred production method for a sheet is a method of rolling and shaping a resin composition by using a pair of rotary shaping tools, of which surface temperature is adjusted to be higher than the melting point of the high molecular weight polyolefin contained in the resin composition. The surface temperature of the rotary shaping tool is preferably (melting point+5)°C or more. Also, the upper limit of the surface temperature is preferably (melting poing+30) °C or less, more preferably (melting point+20)°C or less. The pair of rotary shaping tools include rolls and belts. The peripheral velocities of two rotary shaping tools need not be always strictly the same, and the difference therebetween of within about ±5% is tolerable. A porous film is produced by using a sheet obtained by such a method, whereby a porous film excellent in strength, ion permeability, air permeability and the like can be obtained. Also, single-layer sheets obtained by the method above may be laminated with each other, and used for the production of a porous film.

As the resin composition that is rolled and shaped by a pair of rotary shaping tools, it is possible to directly use a strand-formed resin composition discharged from an extruder for producing the resin composition, and to use a resin composition which has been pelletized.

The method for stretching a sheet, which has been obtained by shaping the resin composition, to produce a porous film is not particularly limited. The sheet may be stretched by using a known apparatus such as tenter, roll and autograph. The stretching may be in the uniaxial direction or biaxial direction, and the stretching may be performed as single-stage stretching or as multistage stretching. In order to cause interfacial separation between the resin and the filler, the stretching ratio is preferably from 2 to 12 folds, more preferably from 4 to 10 folds. The stretching is usually performed at a temperature of from the softening point or more to the melting point or less of the high molecular weight polyolefin, and is preferably performed at 80 to 120°C. By performing the stretching at such a temperature, the film does not tend to be ruptured during stretching, and since the high molecular weight polyolefin does not tend to melt, pores produced by interfacial separation between the resin and the filler are not easily closed. After the stretching, a heat fixing treatment may be performed, if desired, so as to stabilize the pore morphology.

It is possible to remove at least part of the filler from the sheet obtained by shaping the resin composition, and then stretch the sheet by the method described above in order to produce a porous film. Alternatively, it is possible to stretch the sheet obtained by shaping the resin composition by the method described above, and then remove at least a part of the filler in order to produce a porous film. The method for removing the filler includes a method of dipping the sheet or the film after stretching in a liquid capable of dissolving the filler. In the case of using a filler soluble in a neutral, acidic or alkaline aqueous solution, or water, the liquid capable of dissolving the filler is a neutral, acidic or alkaline aqueous solution, or water.

In the present invention, a porous heat-resistant layer can be laminated on at least one surface of the porous film obtained by the above-described method. The multilayer porous film having such a heat-resistant layer is excellent in the thickness uniformity, heat resistance, strength and ion permeability, and therefore can be suitably used as a separator for nonaqueous electrolyte battery, particularly as a lithium secondary battery separator.

The heat-resistant resin constituting the heat-resistant layer is preferably a polymer containing nitrogen atom in the main chain, and a polymer containing nitrogen atom and an aromatic ring is more preferred in view of heat resistance. Examples thereof include an aromatic polyamide (hereinafter, sometimes referred to as an "aramid"), an aromatic polyimide (hereinafter, sometimes referred to as a "polyimide"), and an aromatic polyamideimide. Examples of the aramid include a meta-oriented aromatic polyamide and a para-oriented aromatic polyamide (hereinafter, sometimes referred to as a "para-aramid"). A para-aramid is preferred, because a porous heat-resistant layer having uniform film thickness and superior air permeability can be easily formed.

The para-aramid is obtained by polycondensation of a para-oriented aromatic diamine with a para-oriented aromatic dicarboxylic halide, and is substantially composed of a repeating unit wherein an amide bond is bonded to the para-position or similar orientation position of an aromatic ring (the similar orientation includes orientation position extending coaxially or in parallel to reverse direction, such as 4,4'-biphenylene, 1,5-naphthalene and 2,6-naphthalene). Specific examples thereof include a para-aramid having a structure of a para-orientation or quasi-para-orientation type, such as poly(paraphenyleneterephthalamide), poly(parabenzamide), poly(4,4'-benzanilideterephthalamide), poly(paraphenylene-4,4'-biphenylenedicarboxylic acid amide), poly(paraphenylene-2,6-naphthalenedicarboxylic acid amide), poly(2-chloro-paraphenyleneterephthalamide) and paraphenyleneterephthalamide/2,6-dichloro paraphenyleneterephthalamide copolymer.

At the time of providing a heat-resistant layer, the heat-resistant resin is usually dissolved in a solvent and used as a coating fluid. In the case where the heat-resistant resin is a para-aramid, a polar amide-based solvent or a polar urea-based solvent may be used as the solvent. Specific examples thereof include, but are not limited to, N,N-dimethylformamide, N,N-dimethylacetamide, N-methyl-2-pyrrolidone and tetramethylurea.

In view of coatability, the heat-resistant resin is preferably a heat-resistant resin having an intrinsic viscosity of 1.0 to 2.8 dl/g, more preferably a heat-resistant resin having an intrinsic viscosity of 1.7 to 2.5 dl/g. The intrinsic viscosity value as used herein is a value measured regarding a heat-resistant resin sulfuric acid solution which is obtained by dissolving the once precipitated heat-resistant resin. In view of coatability, the heat-resistant resin concentration in the coating fluid is preferably from 0.5 to 10 wt%.

In the case of using a para-aramid as the heat-resistant resin, in order to improve solubility of the para-aramid in a solvent, an alkali metal chloride or an alkaline earth metal chloride is preferably added at the production of the para-aramid. Specific examples thereof include, but are not limited to, lithium chloride and calcium chloride. The amount of the chloride added to the polymerization system is preferably from 0.5 to 6.0 mol, more preferably from 1.0 to 4.0 mol, per 1.0 mol of an amide bond produced by polycondensation. When the amount of the chloride is 0.5 mol or more, the solubility of a para-aramid produced is sufficient, and when it is 6.0 mol or less, the chloride does not remain undissolved in a solvent and this is preferred. In general, when the amount of the alkali metal chloride or an alkaline earth metal chloride is 2 wt% or more, the solubility of a para-aramid becomes sufficient in many cases, and when it is 10 wt% or less, the alkali metal chloride or an alkaline earth metal chloride is, in many cases, completely dissolved without remaining undissolved in a polar organic solvent such as polar amide-based solvent and polar urea-based solvent.

The polyimide is preferably a whole aromatic polyimide produced by condensation polymerization of an aromatic diacid anhydride with an aromatic diamine. Specific examples of the diacid anhydride include pyromellitic dianhydride, 4,4'-(hexafluoroisopropylidene)diphthalic anhydride, and 3,3',4,4'-biphenyltetracarboxylic dianhydride. Specific examples of the diamine include oxydianiline, paraphenylenediamine, 4,4'-benzophenonediamine, 3,3'-methylenedianiline, 3,3'-diaminobenzophenone, 3,3'-diaminodiphenylsulfone, and 1,5-naphthalenediamine, but the present invention is not limited thereto. In the present invention, a polyimide soluble in a solvent can be suitably used. Examples of such a polyimide include a polyimide that is a condensation polymerization product of 3,3',4,4'-diphenylsulfonetetracarboxylic dianhydride with an aromatic diamine. Examples of the polar organic solvent which can be suitably used for dissolving the polyimide include dimethylsulfoxide, cresol and O-chlorophenol, in addition to those illustrated as the solvent for dissolving the para-aramid.

In the present invention, the coating fluid used for forming the heat-resistant layer preferably contains a ceramic powder. By forming the heat-resistant layer from a coating fluid which is prepared by adding a ceramic powder to a solution having any heat-resistant resin concentration, a finely porous heat-resistant layer having a uniform thickness can be formed. Also, air permeability can be controlled by the amount of ceramic powder added. In view of strength of the porous film and smoothness of the heat-resistant layer surface, the ceramic powder used for the present invention preferably has an average primary particle diameter of 1.0 $\mu$m or less, more preferably 0.5 $\mu$m or less, still more preferably 0.1 $\mu$m or less.

The content of the ceramic powder in the heat-resistant layer is preferably from 1 to 95 wt%, more preferably from 5 to 50 wt%. When the content is 1 wt% or more, sufficient porosity is obtained, and this leads to superior ion permeability. When the content is 95 wt% or less, adequate film strength, and therefore excellent handleability are obtained. The shape of the ceramic powder used is not particularly limited, and either spherical shape or random shape can be used.

The ceramic powder used for the present invention includes a ceramic powder made of an electrically insulating metal oxide, metal nitride or metal carbide, or the like. For example, a powder of alumina, silica, titanium dioxide or zirconium oxide is preferably used. One of these ceramic powders may be used alone, two or more kinds thereof may be used in combination, or the same or different kinds of ceramic powders differing in the particle diameter may be optionally mixed and used.

Examples of the method for laminating a heat-resistant layer on a porous film which is obtained using the resin composition containing a high molecular weight polyolefin, a polyolefin wax and a filler, include a method of separately producing a heat-resistant layer and then stacking it on a porous film, and a method of applying a coating fluid containing a ceramic powder and a heat-resistant resin on at least one surface of a porous film to form a heat-resistant layer. In view of productivity, the latter method is preferred. Specifically, the latter method includes a method comprising the following steps:

(a) preparing a slurried coating fluid by dispersing from 1 to 500 parts by weight of a ceramic powder in a solution containing 100 parts by weight of a heat-resistant resin,
(b) applying the coating fluid on at least one surface of a porous film to form a coating film, and
(c) precipitating the heat-resistant resin from the coating film by humidification, removal of solvent, or dipping in a solvent incapable of dissolving the heat-resistant resin, etc., and then, if desired, drying the precipitated resin.

The coating fluid is preferably applied continuously by using the coating apparatus described in JP2001-316006A and the method described in JP2001-23602A.

The porous film of the present invention exhibits excellent permeability at the operating temperature, can cause shutdown at a low temperature in case of exceeding the operating temperature, and is suitable as a nonaqueous battery separator. Also, the multilayer porous film which has a heat-resistant layer laminated on the porous film of the present invention is superior in heat resistance, strength and ion permeability, and can be suitably used as a nonaqueous battery separator, particularly as a lithium secondary battery separator.

The battery separator of the present invention comprises the above-described porous film or the multilayer porous film. The porous film or the multilayer porous film used for the battery separator preferably has a film resistance of 5 or less in view of ion permeability. Also, from the standpoint of enhancing the safety, the battery separator of the present invention preferably contains the multilayer porous film, because little contraction occurs when heat is applied.

In the case where the battery separator of the present invention contains the porous film of the present invention, the porosity of the porous film is preferably from 30 to 80 vol%, more preferably from 40 to 70 vol%. If the porosity is less than 30 vol%, the electrolytic solution-holding amount may be reduced, whereas if it exceeds 80%, the strength may or the shutdown function may be impaired. Also, the thickness of the porous film is preferably from 5 to 50 $\mu$m, more preferably from 10 to 50 $\mu$m, still more preferably from 10 to 30 $\mu$m. If the thickness is too small, the shutdown function may be insufficient or the battery may be short-circuited when winding it, whereas if it is excessively large, a high electric capacity may not be achieved. The pore size of the porous film is preferably 0.1 $\mu$m or less, more preferably 0.08 $\mu$m or less. With a small pore size, a porous film having a small film resistance is obtained, despite the same air permeability.

In the case where the battery separator of the present invention contains the multilayer porous film of the present invention, the preferred porosity and pore size of the porous film of the multilayer porous film are the same as those of the above-described porous film. However, the film thickness as the entire multilayer porous film is preferably from 5 to 50 $\mu$m, more preferably from 10 to 50 $\mu$m, still more preferably from 10 to 30 $\mu$m. In the multilayer porous film, the porosity of the heat-resistant layer is preferably from 30 to 80 vol%, more preferably from 40 to 70 vol%. If the porosity is too small, the electrolytic solution-holding amount tends to be small, whereas if it is excessively large, the strength of the heat-resistant film tends to be impaired. The film thickness of the heat-resistant layer is preferably from 0.5 to 10 $\mu$m, more preferably from 1 to 5 $\mu$m. If the film thickness is too small, the heat-resistant layer tends to fail in avoiding contraction at the heating, whereas if the film thickness is excessively large, the battery fabricated tends to suffer from bad load characteristics.

The battery of the present invention comprises the battery separator of the present invention. The constituent elements other than the battery separator are described below with reference to, as an example, an embodiment wherein the battery of the present invention is a nonaqueous electrolyte secondary battery such as lithium battery. However, the present invention is not limited thereto.

As the nonaqueous electrolytic solution, for example, a nonaqueous electrolytic solution prepared by dissolving a lithium salt in an organic solvent may be used. The lithium salt includes one or a mixture of two or more of $LiClO_4$, $LiPF_6$, $LiAsF_6$, $LiSbF_6$, $LiBF_4$, $LiCF_3SO_3$. $LiN(SO_2CF_3)_2$, $LiC(SO_2CF_3)_3$, $Li_2B_{10}Cl_{10}$, a lower aliphatic lithium carboxylate, $LiAlCl_4$ and the like. Among these, a lithium salt containing at least one selected from the group consisting of fluorine-containing lithium salts of $LiPF_6$, $LiAsF_6$, $LiSbF_6$, $LiBF_4$, $LiCF_3SO_3$, $LiN(CF_3SO_2)_2$ and $LiC(CF_3SO_2)_3$ is preferably used.

Examples of the organic solvent used in the nonaqueous electrolytic solution include carbonates such as propylene carbonate, ethylene carbonate, dimethyl carbonate, diethyl carbonate, ethylmethyl carbonate, 4-trifluoromethyl-1,3-dioxolan-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyldifluoromethyl ether, tetrahydrofuran and 2-methyltetrahydrofuran; esters such as methyl formate, methyl acetate and γ-butyrolactone; nitrites such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide and 1,3-propanesultone; and solvents obtained by introducing a fluorine substituent into the organic solvents above. Usually, two or more of these organic solvents are mixed and used.

Among these, a mixed solvent containing carbonates is preferred, and a mixed solvent of a cyclic carbonate and an acyclic carbonate, and a mixed solvent of a cyclic carbonate and ethers are more preferred. The mixed solvent of a cyclic carbonate and an acyclic carbonate is preferably a mixed solvent containing ethylene carbonate, dimethyl carbonate and ethyl methyl carbonate, because the operation temperature range is wide, the loading characteristics are excellent, and decomposition is scarcely caused even when a graphite material such as natural graphite and artificial graphite is used as the negative electrode active material. As the positive electrode sheet, a sheet usually used is obtained by loading, on a current collector, a mixture containing a positive electrode active material, an electrically conductive material and a binder. Specifically, it is possible to use a mixture containing a material capable of being doped/dedoped with lithium ions as the positive electrode active material, a carbonaceous material as the electrically conductive material, and a thermoplastic resin or the like as the binder. The material capable of being doped/dedoped with lithium ions includes a lithium mixed oxide containing at least one transition metal such as V, Mn, Fe, Co and Ni. Among these, a layered lithium mixed oxide having an α-NaFeO$_2$ structure as the matrix, such as lithium nickelate and lithium cobaltate; or a lithium mixed oxide having, as the matrix, a spinel structure such as lithium manganese spinel is preferred.

The lithium mixed oxide may contain various additive elements. Particularly, when a mixed lithium nickelate contains 0.1 to 20 mol% of at least one metal selected from the group consisting of Ti, V, Cr, Mn, Fe, Co, Cu, Ag, Mg, Al, Ga, In and Sn, based on the sum of the molar number of the metal and the molar number of Ni in lithium nickelate, the cycle property in use with high capacity is advantageously enhanced.

Examples of the thermoplastic resin as the binder include polyvinylidene fluoride, a copolymer of vinylidene fluoride, polytetrafluoroethylene, a copolymer of tetrafluoroethylene-hexafluoropropylene, a copolymer of tetrafluoroethylene-perfluoroalkyl vinyl ether, a copolymer of ethylene-tetrafluoroethylene, a copolymer of vinylidene fluoride-hexafluoropropylene-tetrafluoroethylene, a thermoplastic polyimide, polyethylene, and polypropylene.

Examples of the carbonaceous material as the electrically conductive material include natural graphite, artificial graphite, cokes and carbon black. Each of these may be used alone, or a mixed electrically conductive system may be used. For example, a mixture of artificial graphite and carbon black may be also selected.

Examples of the negative electrode sheet which can be used include a material capable of being doped/dedoped with lithium ions, a lithium metal, and a lithium alloy. The material capable of being doped/dedoped with lithium ions includes a carbonaceous material such as natural graphite, artificial graphite, cokes, carbon black, pyrolytic carbons, carbon fiber and fired organic polymer compound, and a chalcogen compound such as oxide and sulfide capable of being doped/dedoped with lithium ions at a lower potential than that of the positive electrode. The carbonaceous material is preferably a carbonaceous material containing, as the main component, a graphite material such as natural graphite and artificial graphite. This is because, due to high potential flatness and low average discharge potential, a large energy density is obtained when combined with the positive electrode.

As the negative electrode current collector, Cu, Ni, stainless steel or the like may be used. However, particularly in a lithium secondary battery, Cu is preferred, because it does not tend to form an alloy with lithium, and can be easily formed into a thin film. The method for loading a negative electrode active material-containing mixture on the negative electrode current collector includes a pressure molding method; and a method of forming a paste by using a solvent or the like, applying the paste on a current collector, and subjecting it to drying and then pressure-bonding by pressing or the like.

The shape of the battery of the present invention is not particularly limited, and may be any of paper type, coin type, cylindrical type, prismatic type and the like.

EXAMPLES

The present invention is described in greater detail below by referring to Examples and Comparative Examples, but the present invention is not limited to the following Examples.

(1) Film Thickness

Measurement was performed using VL-50A manufactured by Mitsutoyo Corporation in accordance with JIS K7130.

(2) Puncture Strength

The porous film was fixed by a washer of 12 mm in diameter and punctured with a pin at a rate of 200 mm/min. The maximum stress (gf) during puncture was defined as the puncture strength of the film. The pin used had a pin diameter of 1 mm and a tip of 0.5 R.

(3) Melt Index (MI)

The measurement was performed using Melt Indexer manufactured by Takara Co. in accordance with JIS K7130. The measurement temperature was 240°C, and an indexer having an orifice diameter of 3.3 mm was used. In the case of a composition, a load of 21.6 kg was used for the measurement. A higher MI value indicates better processability.

(4) Intrinsic Viscosity

The measurement was performed in accordance with JIS K7367-1. Tetralin was used as the solvent, and the intrinsic viscosity was measured at 135°C by a Ubbelohde viscometer.

Example 1:

20.9 gram (=W1) of a high molecular weight polyethylene powder (Hi-Zex Million 145M, produced by Mitsui Chemicals, Inc.) having an intrinsic viscosity $[\eta]$ of 7.7, 3.7 g (=W2) of a polyethylene wax powder (HI-WAX 110P, produced by Mitsui Chemicals, Inc., weight average molecular weight: 1,000), 39.6 g of calcium carbonate (010As, produced by Maruo Calcium Co., Ltd.), 0.17 g of an antioxidant (Irg1010, produced by Ciba Specialty Chemicals), 0.05 g of an antioxidant (P168, produced by Ciba Specialty Chemicals), and 0.47 g of sodium stearate were mixed in their as-is powder state. In a Labo Plastomill (Model R-60H), the mixture was kneaded at 200°C and 60 rpm for 3 minutes and further kneaded at 230°C and 100 rpm for 3 minutes, and then the resulting uniform kneaded product was taken out.
The kneaded product obtained was processed into a sheet form having a thickness of about 150 $\mu$m by a heat press which was set to 230°C, and then solidified by a cooling press. The obtained sheet was washed with a surfactant-containing hydrochloric acid to provide a porous sheet by dissolving calcium carbonate therein, and then washed with water and dried. The obtained porous sheet was uniaxially stretched to 5 folds by using an autograph (AGS-G, manufactured by Shimadzu Corporation) to obtain a stretched film. The stretching was performed at 105°C and a stretching speed of 200 mm/min. The puncture strength of the stretched film is shown in Table 1.

Example 2:

A kneaded product and a stretched film were obtained in the same manner as in Example 1 except for using a high molecular weight polyethylene (GUR4012, produced by Ticona) having an intrinsic viscosity $[\eta]$ of 7.5 in place of the high molecular weight polyethylene having an intrinsic viscosity $[\eta]$ of 7.7. The evaluation results are shown in Table 1.

Comparative Example 1:

A kneaded product and a stretched film were obtained in the same manner as in Example 1 except for using 17.2 g (=W1) of a high molecular weight polyethylene powder (GUR4032, produced by Ticona) having an intrinsic viscosity $[\eta]$ of 14.1 in place of the high molecular weight polyethylene having an intrinsic viscosity $[\eta]$ of 7.7, and changing the amount of the polyethylene wax powder (HI-WAX 110P, produced by Mitsui Chemicals, Inc., weight average molecular weight: 1,000) to 7.4 g (=W2). The evaluation results are shown in Table 1. Comparative Example 2:
A kneaded product and a stretched film were obtained in the same manner as in Example 1 except for using 19.7 g (=W1) of a high molecular weight polyethylene powder (GUR4113, produced by Ticona) having an intrinsic viscosity $[\eta]$ of 10.2 in place of the high molecular weight polyethylene having an intrinsic viscosity $[\eta]$ of 7.7, and changing the amount of the polyethylene wax powder (HI-WAX 110P, produced by Mitsui Chemicals, Inc., weight average molecular weight: 1,000) to 4.9 g (=W2). The evaluation results are shown in Table 1.

Table 1

| | $[\eta]$ | $\{W2/(W1+W2)\}\times 100$ | Left Side of Formula (1) | Right Side of Formula (1) | MI (g/10 min) | Puncture Strength (gf/μm) |
|---|---|---|---|---|---|---|
| Example 1 | 7.7 | 15 | 12.1 | 25.1 | 12.0 | 10.2 |
| Example 2 | 7.5 | 15 | 11.3 | 24.3 | 28.3 | 11.7 |
| Comparative Example 1 | 14.1 | 30 | 39.6 | 52.6 | 2.3 | 18.2 |
| Comparative Example 2 | 10.2 | 20 | 22.9 | 35.9 | 2.1 | 12.7 |

INDUSTRIAL APPLICABILITY

According to the present invention, it is possible to provide a resin composition having a well balanced processability at the production of a porous film and puncture strength of the porous film, a sheet obtained using the resin composition, a porous film, a battery separator, and a battery.

**Claims**

1. A resin composition containing a filler, a high molecular weight polyolefin, and a polyolefin wax having a weight average molecular weight of 700 to 6,000, wherein the resin composition satisfies the following formula (1), where the weight of the ultrahigh molecular weight polyolefin contained in the resin composition is W1, the weight of the polyolefin wax having a weight average molecular weight of 700 to 6,000 is W2, and the intrinsic viscosity of the ultrahigh molecular weight polyolefin is $[\eta]$:

$$[\eta]\times 4.3-21<\{W2/(W1+W2)\}\times 100<[\eta]\times 4.3-8 \qquad \text{Formula (1)}$$

2. The resin composition according to claim 1, wherein the filler is an inorganic filler.

3. The resin composition according to claim 2, wherein the inorganic filler is calcium carbonate.

4. A sheet obtained by shaping the resin composition according to any one of claims 1 to 3.

5. A porous film obtained by stretching the sheet according to claim 4.

6. A porous film obtained by removing at least part of the filler from the sheet according to claim 4 and then stretching the sheet.

7. A porous film obtained by stretching the sheet according to claim 4 and then removing at least part of the filler therefrom.

8. A multilayer porous film which has the porous film according to any one of claims 5 to 7 and a porous heat-resistant layer laminated to each other.

9. A battery separator comprising the porous film according to any one of claims 5 to 7 or the multilayer porous film according to claim 8.

10. A battery comprising the battery separator according to claim 9.

| INTERNATIONAL SEARCH REPORT | International application No. |
|---|---|
| | PCT/JP2010/052007 |

A. CLASSIFICATION OF SUBJECT MATTER
*C08L23/00*(2006.01)i, *C08J9/00*(2006.01)i, *C08K3/00*(2006.01)i, *H01M2/16*
(2006.01)i

According to International Patent Classification (IPC) or to both national classification and IPC

B. FIELDS SEARCHED

Minimum documentation searched (classification system followed by classification symbols)
C08L23/00, C08J9/00, C08K3/00, H01M2/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-069221 A (Sumitomo Chemical Co., Ltd.), 08 March 2002 (08.03.2002), entire text & US 2002/0034689 A1 & EP 1168469 A2 & DE 60128422 D & CA 2350379 A & CN 1331496 A | 1-10 |
| X | JP 2006-307193 A (Sumitomo Chemical Co., Ltd.), 09 November 2006 (09.11.2006), claims; example 1 & US 2006/0234031 A1 & DE 102006014360 A & KR 10-2006-0106720 A & CN 1846840 A | 1-10 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 March, 2010 (15.03.10) | 23 March, 2010 (23.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/052007

C (Continuation). DOCUMENTS CONSIDERED TO BE RELEVANT

| Category* | Citation of document, with indication, where appropriate, of the relevant passages | Relevant to claim No. |
|---|---|---|
| X | JP 2008-081535 A (Sumitomo Chemical Co., Ltd.), 10 April 2008 (10.04.2008), claims; example 1 & EP 2070975 A1 & WO 2008/038818 A1 & KR 10-2009-0074215 A & CN 101541867 A | 1-10 |
| X | JP 2006-028495 A (Toray Industries, Inc.), 02 February 2006 (02.02.2006), comparative example 1 (Family: none) | 1-5 |
| A | JP 2000-044722 A (Nitto Denko Corp.), 15 February 2000 (15.02.2000), entire text (Family: none) | 1-10 |
| A | JP 2008-527118 A (Borealis Technology Oy), 24 July 2008 (24.07.2008), entire text & US 2008/0097022 A1 & EP 1836255 A & WO 2006/074693 A1 & CN 101072824 A & BRA PI0519319 & EA 200701226 A | 1-10 |
| A | JP 2001-357832 A (Celgard Inc.), 26 December 2001 (26.12.2001), entire text & US 6749961 B1 & EP 1146577 A1 & CA 2340597 A & TW 483185 B & CN 1317837 A & SG 99893 A | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002069221 A
- JP 2001316006 A
- JP 2001023602 A